Europäisches Patentamt

European Patent Office

Office européen des brevets

(19)

(11) Veröffentlichungsnummer : **0 467 897 B1**

(12) # EUROPÄISCHE PATENTSCHRIFT

(45) Veröffentlichungstag der Patentschrift :
04.08.93 Patentblatt 93/31

(51) Int. Cl.⁵ : **A01D 43/10, A01D 43/00**

(21) Anmeldenummer : 90904836.5

(22) Anmeldetag : 27.03.90

(86) Internationale Anmeldenummer :
PCT/EP90/00487

(87) Internationale Veröffentlichungsnummer :
WO 90/12492 01.11.90 Gazette 90/25

(54) **VERFAHREN UND VORRICHTUNG DER GRÜNFUTTERAUFBEREITUNG.**

(30) Priorität : 15.04.89 DE 3912437

(43) Veröffentlichungstag der Anmeldung :
29.01.92 Patentblatt 92/05

(45) Bekanntmachung des Hinweises auf die
Patenterteilung :
04.08.93 Patentblatt 93/31

(84) Benannte Vertragsstaaten :
AT BE CH DE DK ES FR GB IT LI LU NL SE

(56) Entgegenhaltungen :
EP-A- 205 206
WO-A-82/03745
DE-A- 3 232 746
DE-A- 3 512 300
FR-A- 590 562
GB-A- 478 505
GB-A- 2 019 731

(56) Entgegenhaltungen :
GB-A- 2 102 270
NL-A- 6 909 348
NL-A- 7 703 304
US-A- 4 332 125
LANDBOUW MECHANISATIE. Vol. 40, No. 2, 01
February 1989, Wageningen NL; see pages
21-23; BOSMA EN KOEGEL: see page
21,middle column

(73) Patentinhaber : **Klöckner-Humboldt-Deutz AG**
**Nikolaus-August-Otto-Allee**
**W-5000 Köln 90 (DE)**

(72) Erfinder : **von Allwörden, Wilhelm**
**Alpenstrasse 18**
**W-7704 Gailingen (DE)**

(74) Vertreter : **Nau, Walter, Dipl.-Ing.**
**c/o Klöckner-Humboldt-Deutz AG,**
**Patentabteilung AE-GP, Postfach 80 05 09**
**W-5000 Köln 80 (DE)**

## Beschreibung

Die Erfindung bezieht sich auf ein Verfahren zur Futteraufbereitung, vorzugsweise Grünfutteraufbereitung, bei welchem abgemähtes Halmgut zur Beschleunigung seines Trocknungsprozesses von gegenläufig rotierenden Preßelementen, die die Halme aufspleißen, durch einen Spreßspalt gefördert wird.

Eine Vorrichtung zur Durchführung des vorgenannten Verfahrens ist bekannt aus der EP-A-0205206. In dieser bekannten Vorrichtung wird das Grünfutter zwischen zwei auf mehreren Antriebs- bzw. Umlenkrollen geführten Bändern, von welchen eines eine gelochte Struktur aufweist, gepreßt. Dabei wird ein Teil der in den Halmen vorhandenen Flüssigkeit aus der Grünmasse herausgepreßt, so daß der anschließende Trocknungsprozeß bis zur Ernte des Heus verkürzt wird. Zum andere kann die in den Halmen verbleibende restliche Flüssigkeit dadurch schneller verdunsten, daß die Oberfläche der Halme durch den Preßvorgang aufgespleißt wird. Die Preßelemente verläßt zu einer Halmgutmatte verdichtetes Grünfutter, wobei die Dichte und der jeweilige Querschnitt der Halmgutmatte von der jeweils gemähten oder aufgesammelten Grünfuttermenge abhängig ist. Bei dünnem Halmgutbestand, insbesondere auf Vorgewenden und beim Ausmähen von Rändern fehlt bei diesem Verfahren die nötige Halmgutmasse um eine gleichmäßig starke und in sich stabile Matte zu produzieren. Andererseits verläßt die Halmgutmatte die bekannte Vorrichtung in sich ungeordnet und mit geringer Stabilität, das heißt, die Halmgutmatte zerfällt beim Verlassen der Maschine und entsprechender Ablage auf den Halmgutstoppeln in kleine Elemente, die sich bei einem späteren Ernteverfahren schlecht bergen lassen. Daher sind die Bröckelverluste sehr groß. Außerdem wird der Trocknungsprozeß dadurch verlängert, daß Blatt- und Halmanteile des Grünfutters nicht ausreichend vermischt sind.

Aus der GB-A 2 102 270 geht eine Strohbrikettierpresse hervor, mit der bereits geerntetes und zu Rundballen geformtes Stroh zu hochverdichteten Strohbriketts verarbeitet wird. Die Druckschrift bezieht sich auf ein Verfahren, mit dem ein Erntegut, welches bereits einem Trocknungs-Preß- und Transportprozeß unterzogen wurde, zur weiteren Volumenreduzierung hochverdichtet wird. Zur Einflußnahme auf die Beschickung, beziehungsweise den Durchsatz von Rundballen ist dieser Druckschrift lediglich die Regelung der Zuführorgane entnehmbar, die den Preßelementen vorgeschaltet sind. Die Beschreibung weist dazu auf einen sogenannte Rundballen-Auflösevorrichtung hin, deren Abwinkelgeschwindigkeit regelbar ist. Die nachgeschalte Brikettierpresse ist dagegen mit einem Konstantantrieb versehen.

Es ist daher Aufgabe der Erfindung, ein Verfahren und eine Vorrichtung zu schaffen, mit welchen die Halmgutaufbereitung dahingehend verbessert werden kann, daß die Halmgutmatte eine möglichst gleichmäßige Stärke und Dichte sowie eine hohe Stabilität aufweist, wobei ihre Bestandteile möglichst gleichmäßig vermischt sein sollen.

Diese Aufgabe wird nach dem kennzeichnenden Teil des Anspruchs 1 dadurch gelöst, daß zur Herstellung einer eine im wesentlichem gleichmäßige Dichte und einen gleichmäßigen Querschnitt aufweisende Halmgutmatte das den Preßspalt zugeführte Halmgutvolumen gemessen und in Abhängigkeit davon die Fördergeschwindigkeit der Preßelemente geregelt wird. Nach diesem erfindungsgemäßen Verfahren wird somit die jeweilige Fördergeschwindigkeit der Preßelemente nach der anfallenden Halmgutmenge eingestellt. Reduziert sich demnach die dem Einzugsbereich der Preßelemente anstehende Grünfuttermenge, so wird zur Erzielung eines gleichmäßigen mattenförmigen Preßstranges die Fördergeschwindigkeit reduziert.

Alternativ dazu besteht gemäß Anspruch 2 die Möglichkeit, zur Herstellung einer eine im wesentlichen gleichmäßige Dichte und einen gleichmäßigen Querschnitt (Dicke) aufweisenden Halmgutmatte das dem Preßspalt zugeführte Halmgutvolumen zu messen und in Abhängigkeit davon die Breite des Halmgutstrangs im Zuführbereich der Preßelemente zu steuern. Durch die Veränderung der Breite des Halmgutstrangs kann im nachfolgenden Preßvorgang eine Halmgutmatte mit gleichmäßiger Dichte und gleichmäßigem Querschnitt hergestellt werden, die bei reduzierter Halmgutmenge entsprechend schmaler ausgebildet ist.

Weitere vorteilhafte Ausgestaltungen des Verfahrens sind in den Ansprüchen 3 bis 11 beschrieben. Gemäß Anspruch 3 soll sich in einem den Preßelementen vorgeschalteten Raum ständig eine gewiße vom jeweiligen Volumen abhängige Halmgutmenge sammeln, die gemessen wird. Würde sich diese in dem Raum vorhandene Halmgutmenge aufgrund eines geringeren Halmgutbestands reduzieren, so wird in entsprechender Weise die Fördergeschwindigkeit der Preßelemente reduziert oder die Breite des Zuführbereichs verringert. Es besteht aber auch die Möglichkeit, die Halmgutmenge im Einzugsbereich der Preßelemente zu bestimmen. So könnte beispielsweise die auf die Preßelemente wirkende Kraft gemessen werden.

Weiterhin soll gemäß Anspruch 4 die Länge der den Preßspalt verlassenden Halmgutmatte ermittelt und in Abhängigkeit davon die Halmgutmatte durchtrennt werden. Damit wird sichergestellt, daß die Matte nicht über einen längeren Zeitraum derart über die Halmgutstoppeln schleift oder während des Aufbereitungsvorgangs über einen längeren Zeitraum erschüttert wird. Sowohl das Schleifen der Halmgutmatte über die Stoppeln als auch deren Erschütterungen würden nämlich ein Zerbrechen der Halmgutmatte und damit hohe Bröckelverluste zur Folge haben.

Weiterhin besteht gemäß Anspruch 5 im Rahmen des Verfahrens die Möglichkeit, die Halmgutmatte zu durchtrennen bei überschreitung eines unteren Grenzwertes der Mattenlänge und einer Verzögerung der Fördergeschwindigkeit der Preßelemente. Diese Ausgestaltung des Verfahrens geht von der Problematik aus, daß sich bei geringem Halmgutvolumen vor den Preßelementen und verringerter Fördergeschwindigkeit die am Ende der Preßelemente hergestellte Halmgutmatte über einen längeren Zeitraum kaum verändert und ebenfalls aufgrund von Erschütterungen oder eines Schleifens über die Halmgutstoppeln :erstört werden könnte. Nunmehr soll dann, wenn eine Mindestlänge der Matte erreicht ist und die Preßelemente zumindest über einen gewißen Zeitraum aus ihrer normalen Fördergeschwindigkeit heraus verzögert sind, die Halmgutmatte durchtrennt werden.

Gemäß Anspruch 6 wird vorgeschlagen, daß den Preßelementen ein Aufbereiter vor- und/oder nachgeschaltet ist, der die Halme und sonstigen Grünfutterbestandteile vermischt, einzelne Halme zumindest sektionsweise ausrichtet und miteinander zu einer Halmgutmatte verwirkt. Durch das Mischen von Blatt- und Stengelanteil der Grünfuttermasse wird erreicht, daß innerhalb der gepreßten Halmgutmatte die Bestandteile gleichmäßig verteilt sind und somit ein gleichmäßiger Trocknungsprozeß ablauten kann. Die Halme werden im Aufbereiter netzartig miteinander verwirkt und erhöhen damit die Stabilität der im vorgeschalteten oder nachgeschalteten Preßverfahren endgültig hergestellten Matte. Die am Ende des Verfahrens ruf die Halmgutstoppeln abgelegte Matte ist daher in sich so stabil daß beim Ablegen und bei nachfolgenden Ernteverfahren Bröckelverluste vermieden werden können. Selbstverständlich kann nach dem erfindungsgemäßen Verfahren auch eine aus Stroh bestehende Halmgutmatte hergestellt werden. Auch kann Flachs zur beschleunigten Rößte bearbeitet werden.

Gemäß Anspruch 7 sollen im Aufbereiter durch in die Halmgutmatte quer zu deren Förderrichtung intermittierend eingreifende Mittel einzelne Halme abschnittsweise webmusterartig in der Halmgutmatte ausgerichtet. Die intermittierend bewegten Mittel durchsetzen dabei phasenweise die Matte, wobei die Halm- und Blattbestandteile vermischt sowie einzelne Halme erfaßt und ausgerichtet werden. Die Mittel bewegen diese erfaßten Halme quer zu deren Bewegungsrichtung aus der Halmgutmatte heraus. An den Eingriffsstellen wird eine Verdichtung des Halmguts durch die eingreifenden Mittel hervorgerufen, die sich positiv ruf die Stabilität der Matte auswirkt. Außerdem wird durch diese Einstichstellen die Matte sehr luftdurchlässig, so daß die auf den Halmgutstoppeln abgelegte Matte besser austrocknen kann.

In weiterer Ausgestaltung der Erfindung sollen gemäß Anspruch 8 die Halme der Preßgutmatte sektionsweise ausgerichtet werden durch pulsierende strahlen eines flüssigen Druckmittels. Danach treffen diese Flüssigkeitsstrahlen quer zur Bewegungsrichtung der Preßgutmatte auf einzelne Halme ruf und treiben diese teilweise durch die Matte hindurch, so daß ebenfalls ein Verweben oder Verfilzen der Matte erreicht wird. Dabei kann dem flüssigen Druckmittel nach Anspruch 9 zur Verbesserung der Stabilität der Preßgutmatte ein Bindemittel zugesetzt werden.

Weiterhin besteht nach Anspruch 10 die Möglichkeit, den während des Preßvorgangs aus dem Halmgut entweichenden Saft, der einen hohen Nährstoffgehalt hat, auf die Preßgutmatte aufzusprühen. Dadurch nimmt die Halmgutmatte den nährstoffreichen Grünfuttersaft auf, und bei der anschließenden Feldtrocknung verdunstet nurmehr der Wasseranteil, während die Nährstoffe in der Halmgutmatte verbleiben.

Am Ende der Grünfutteraufbereitung erfolgt, wie bereits in den Ansprüchen 4 und 5 dargelegt, ein Schneiden der Matten, wobei aber zusätzlich gemäß Anspruch 11 die jeweilige Halmgutmatte vor ihrer Ablage derart geknickt werden kann, daß sie dachförmig auf den Halmgutstoppeln abgelegt wird. Durch die dachförmige Ausbildung der Halmgutmatte wird diese sehr unempfindlich gegenüber Witterungseinflüssen.

Die Erfindung bezieht sich gemäß Anspruch 12 auch auf eine Vorrichtung zur Durchführung des Verfahrens nach Anspruch 1 mit einer Mäh- und Aufsammeleinrichtung für das Halmgut und einer dieser nachgeschalteten Preßbänder oder -walzen aufweisenden Preßeinrichtung. Erfindungsgemäß ist der Preßeinrichtung eine Vorkammer vorgeschaltet, in welcher Sensoren zur Ermittlung der momentan anfallenden Halmgutmenge angeordnet sind, und die Preßeinrichtung weist eine stufenlos einstellbare Antriebseinrichtung auf. Eine Regeleinrichtung verstellt die Antriebseinrichtung in Abhängigkeit von einem über die Sensoren ermittelnden Istwert der Halmgutmenge. Verringert sich folglich die in der Vorkammer anfallende Halmgutmenge, so wird dies von den Sensoren ermittelt und in entsprechender Weise eine Regelgröße an die Verstellung der Antriebseinrichtung der Preßelemente abgegeben.

Für eine Vorrichtung mit den gattungsbildenden Merkmalen des Anspruchs 12 wird nach Anspruch 13 alternativ zur Lösung des Anspruchs 12 ebenfalls über Sensoren in einer Vorkammer die momentan anfallende Halmgutmenge ermittelt. Aufgrund dieses Meßwertes wird über vertikale Stellklappen oder -rollen die Zuführbreite zu den Preßelementen verändert. Auf diese Weise läßt sich durch eine entsprechende Steuerung der Mattenbreite deren Dichte und Querschnitt bei veränderter Zuführmenge konstant halten.

Weiterhin wird, ebenfalls alternativ zu den Lösungen der Ansprüche 12 und 13, nach Anspruch 14 bei einer gattungsmäßigen Vorrichtung die Mattenbreite in Abhängigkeit von der gemessenen Halmgutmenge über einen in seiner Drehzahl stufenlos veränderbaren Querförderer eingestellt. Dieser Querförderer kann gemäß den Ansprüchen 15 und 16 als horizontal angeordnete Förderschnecke ausgebildet sein, wobei die Föderschnecke vorzugsweise gegenläufig gewundene Schneckengänge aufweist.

Gemäß Anspruch 17 kann die Antriebseinrichtung als stufenlos verstellbares Umschlingungsgetriebe ausgebildet sein, dessen Primär- und Sekundärscheibe in ihrem Durchmesser veränderbar sind. Auf diese Weise läßt sich mit einfachen Mitteln, d.h. einem sogenannten Variatorantrieb über hydraulische Stellmittel die Fördergeschwindigkeit der Preßeinrichtung einstellen.

Weiterhin soll nach Anspruch 18 die Antriebseinrichtung eine durch die Regeleinrichtung betätigbare Kupplung aufweisen. Diese Kupplung kann dann ausgerückt werden, wenn in der Vorkammer kein Halmgut oder eine vernachlässigbar geringe Halmgutmenge anfällt. In diesem Fall ist eine völlige Abschaltung der Preßeinrichtung sinnvoll.

In weiterer Ausgestaltung der Erfindung nach Anspruch 19 soll der Preßeinrichtung eine in vertikaler Richtung, quer zur Bewegungsrichtung der Halmgutmatte wirkende Schneideinrichtung nachgeschaltet sein, die durch die Regeleinrichtung betätigbar ist in Abhängigkeit von dem über die Sensoren an die Regeleinrichtung abgegebenen Signal "Vorkammer leer" und/oder einem die Mattenlänge bestimmenden Meßwertaufnehmer. Die Schneideinrichtung durchtrennt den Mattenstrang, wenn die vorgegebenen Parameter eingetreten sind, und verhindert damit, daß die Matte durch über einen längeren Zeitraum auftretende Schwingungen oder durch ihr Schleifen auf den Halmgutstoppeln zerstört wird. Der Meßwertaufnehmer, der die Mattenlänge bestimmt, kann beispielsweise als Zählrad ausgebildet sein.

Nach Anspruch 20 kann innerhalb der Preßeinrichtung ein die Halme ausrichtender Aufbereiter vorgesehen sein, der als intermittiernd quer zur Förderrichtung der Halmgutmatte bewegte Platten mit daran befestigten Nadeln ausgebildet ist, wobei die Nadeln jeweils zumindest einen Mitnahmehaken aufweisen. Diese mit Mitnahmehaken versehenen Nadeln stechen phasenweise in die Halmgutmatte und richten dabei einzelne Halme aus, deren Enden sie beim Herein- oder Herausbewegen aus der Halmgutmatte quer durch die Matte hindurchziehen oder hindurchstoßen. Dadurch werden diese Halmenden mit der übrigen Matte verwirkt.

Alternativ zu Anspruch 20 besteht nach Anspruch 21 die Möglichkeit, zumindest eine an ihrem Umfang mit Rillen versehene Halmgutfördertrommel vorzusehen, an die eine mit widerhakenförmigen Nadeln versehen Platte radial intermittierend beweglich ist. Die Halmgutfördertrommel übernimmt dabei die Ausrichtung der Halme, während die radial an die Halmgutfördertrommel heranbewegten Nadeln die Matte durchstechen und sektionsweise Halmenden quer zur Matte ausrichten.

In weiterer Ausgestaltung der Erfindung können gemäß Anspruch 22 die Nadeln mit pilzförmigen Mitnahmehaken versehen sein. Über diese pilzförmigen Mitnahmehaken werden beim Herein- oder Herausziehen der Nadeln in die bzw. aus der Halmgutmatte gleichzeitig mehrer Halme erfaßt, so daß sich ein besonders günstiger Webeffekt erzielen läßt.

Auch besteht nach Anspruch 23 die Möglichkeit, daß die Nadeln Seitenwände eines Förderschachts durchgreifen. Damit kann sichergestellt werden, daß sich die Halme nach dem Eingreifen der Nadeln in die Preßgutmatte von diesen wieder lösen.

Die Platten können aber auch, wie in Anspruch 24 vorgeschlagen, an ihren einander zugewandten Flächen Ausnehmungen aufweisen, in die die Nadeln der jeweils anderen Platte hineinbewegbar sind. Dabei können die Platten nach Anspruch 25 über einen Exzenterantrieb antreibbar sein.

Stellt sich heraus, daß Bestandteile des Grünfutters an den Platten und/oder Nadeln haften, so wird gemäß Anspruch 26 vorgeschlagen, die Platten und/oder Nadeln mit einer Antihaft-Beschichtung zu versehen. Da Steine oder Metallteile die Nadeln des Aufbereiters und die Preßeinrichtung insgesamt beschädigen können, soll gemäß Anspruch 27 der Preßeinrichtung bzw. dem Aufbereiter innerhalb der Vorkammer ein Stein- oder Metallabscheider vorgeschaltet sein. Es empfiehlt sich, einen Stein- oder Metallabscheider in der an Erntemaschinen üblichen Form, beispielsweise mit einer Mulde oder einem elektrischen Detektor zu verwenden.

Die Erdindung beschränkt sich nicht auf die Merkmalskombination der Ansprüche. Vielmehr ergeben sich für den Fachmann weitere sinnvolle Kombinationsmöglichkeiten von Ansprüchen und einzelnen Anspruchsmerkmalen aus der der Erfindung zugrundeliegenden Aufgabenstellung.

Zur weiteren Erläuterung der Erfindung wird auf die Zeichnung verwiesen, in der Ausführungsbeispiele vereinfacht dargestellt sind. Es zeigen:

Fig. 1      eine fahrbare Vorrichtung zur Grünfutteraufbereitung mit einer Mäheinrichtung, einer einem Konditionierer nachgeschalteten Vorkammer, einer in ihrer Fördergeschwindigkeit regelbaren Preßeinrichtung, einem Aufbereiter und einer Schneideinrichtung,

Fig. 2      ein Flußdiagramm für die Reglung der Fördergeschwindigkeit der Preßelemente in Abhängigkeit vom Halmgutvolumen in einer Vorkammer,

Fig. 3      eine Ausführung des Aufbereiters, bei der das Halmgut durch einen dasselve verdichtenden Förderschacht bewegt wird, wobei an einer Platte befestigte Nadeln intermittierend in den Förderschacht hinein- und herausbewegt werden,

Fig. 4     eine Ausbildung des Aufbereiters, bei der das Halmgut bereits als Matte verfestigt, durch einen Förderschacht bewegt wird und an einer Platte befestigte Nadeln durch die Seitenwand des Förderschachts in die Halmgutmatte hinein- und herausbewegt werden,

Fig. 5     eine Ausbildung des Aufbereiters, bei der auf zwei Platten angeordnete Nadeln jeweils durch Seitenwände eines Förderschachts bewegt werden,

Fig. 6     eine Ausbildung des Aufbereiters, bei der zwei mit Nadeln besetzte Platten radial zu einer
           Halmgutfördertrommel bewegt werden,

Fig. 7     eine Darstellung von Einzelheiten der Ausgestaltung nach Fig. 4,

Fig. 8     eine Struktur einer nach Fig. 7 bearbeitenden Halmgutmatte,

Fig. 9     die fahrbare Vorrichtung zur Grünfutteraufbereitung nach Fig. 1 im Feldeinsatz,

Fig.10     einen Ausschnitt aus einer fahrbaren Vorrichtung nach Fig. 1, bei der aber durch einen Querförderer
           die Mattenbreite veränderbar ist.

Fig.11     ein Flußdiagramm für die Regelung des Zuführbereichs bei der Vorrichtung nach Fig. 10.

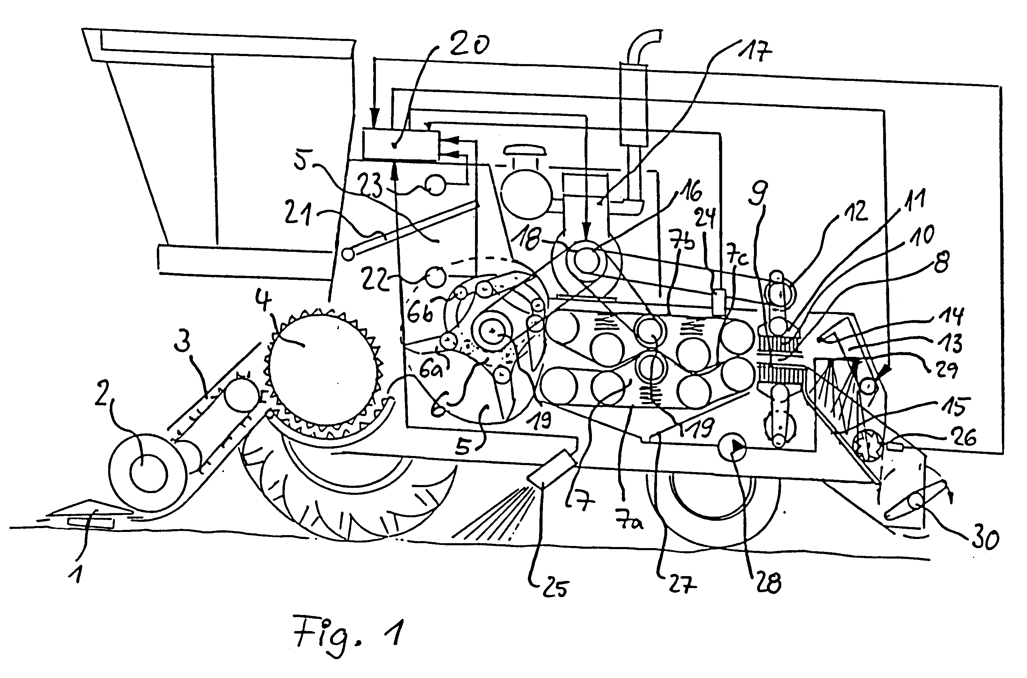

Die fahrbare Vorrichtung zur Grünfutteraufbereitung nach Fig. 1 weist eine mit 1 bezeichnete Mäheinrichtung in Form eines Scheibenmähwerks auf, der ein Querförderer 2 und ein Elevator nachgeschaltet sind. Das
gemähte Gut gelangt über den Elevator 3 in einen Trommelkonditionierer 4, in welchem die Halme zur Beschädigung ihrer Oberfläche gerieben werden. Das den Trommelkonditionierer 4 verlassende Grünfutter gelangt
in eine Vorkammer 5, in welchem ein Zuförderer 6 angeordnet ist. Förderzinken 6a, die über einen Exzenterantrieb 6b ähnlich einer Mähhaspel eines Mähdreschers antreibbar sind, führen das Halmgut bzw. Grünfutter
aus der Vorkammer 5 heraus einer Preßeinrichtung 7 zu, die das Halmgut zu einer Halmgutmatte verformt.
Die Preßeinrichtung weist in ihrer Antriebsrichtung gegenläufig rotierende Preßbänder 7a und 7b auf, die zwischen sich einen Preßspalt 7c bilden. Die den Preßspalt verlassende Halmgutmatte gelangt in einen Förderschacht 8 eines Aufbereiters 9. In diesem Aufbereiter 9 sind oberhalb und unterhalb des Förderschachts 8 mit
Nadeln 10 besetzte Platten 11 angeordnet, die intermittierend quer zur Bewegungsrichtung der Halmgutmatter
über Exzenterantriebe 12 derart bewegt werden, daß die Nadeln 10 phasenweise in das Innere des Förderschachts 8 hineingeführt werden und dabei in die Halmgutmatte eingreifen.

Dem Aufbereiter ist eine Schneideinrichtung 13 nachgeschaltet, die ein vertikal bewegtes Messer 14 aufweist und bestimmte Abschnitte der Halmgutmatte die sich auf einer Rutsche 15 befindet, abtrennt.

Sowohl der Zuförderer 6 als auch die Preßeinrichtung 7 werden über ein Umschlingungsgetriebe 16 von
einer Brennkraftmaschine 17 angetrieben. Dieses Umschlingungsgetriebe 16 ist in seinem übersetzungsverhältnis stufenlos einstellbar, das heißt, an einer Kurbelwelle der Brennkraftmaschine 17 angeordnete Primärscheiben 18 und jeweils am Zuförderer 6 und an der Preßeinrichtung 7 angeordnete Sekundärscheiben 19 sind
nach der Art eines Variatorantriebes in Ihrer Umfangsgröße veränderbar. Aufgrund dieser Veränderung des
übersetzungsverhältnisses gegenüber einer Antriebsdrehzahl der Brennkraftmaschine ändern sich die Fördergeschindigkeiten des Zuförderers 6 und der Preßeinrichtung 7. Das stufenlos verstellbare Umschlingungsgetriebe 16 wirkt ebenfalls auf den Antrieb des Aufbereiters 9, so daß die mit den Nadeln 10 besetzten Platten
11 synchron zur Fördergeschindigkeit im Preßspalt 7c bewegt werden.

Die Verstellung des Umschlingungsgetriebes 16 sowie die Schneideinrichtung 13 werden beherrscht von
einer Regeleinrichtung 20. Diese Regeleinrichtung 20 erhält Eingangssignale von mehreren Sensoren und
Meßwertaufnehmern. Innerhalb der Vorkammer 5 ist eine gelenkig aufgehängte Meßklappe 21 angeordnet,
die mit Sensoren 22 und 23 zusammenwirken. Entsprechend einem bestimmten Halmgutvolumen in der Vorkammer 5 wird diese Meßklappe 21 ausgelenkt und gelangt bei leerer Vorkammer 5 in den Bereich des Sensors
22 und bei voller Vorkammer 5 in den Bereich des Sensors 23. Darüber hinaus besteht aber auch die Möglichkeit, anstelle der beiden Sensoren im Gelenk der Meßklappe 21 eine die Verschwenkung der Meßklappe
21 überwachende Einrichtung in Form eines Potentiometers vorzusehen.

Weiterhin steht die Regeleinrichtung 20 über Eingänge mit einem die Fördergeschwindigkeit der Preßeinrichtung 7 überwachenden Sensor 24 und einem die Fahrgeschwindigkeit der Erntevorrichtung überwachenden Einrichtung 25 in Verbindung. Schließlich ist noch ein Meßwertaufnehmer 26 in Form eines Zinkenrades
vorgesehen, das aufgrund seiner Umdrehungen die jeweilige Mattenlänge überwacht. Dieser Meßwertaufnehmer 26 steht ebenfalls mit einem Eingang der Regeleinrichtung 20 in Verbindung.

Die Funktion der im wesentlichen aus den Bauelementen 20 bis 26 sowie 5, 13 und 16 bestehenden Einrichtung ist folgende:

Bei einer maximalen Halmgutmenge in der Vorkammer 5 nimmt die Meßklappe 21 eine Stellung im Bereich
des Sensors 23 ein, woraufhin die Regeleinrichtung über eine Verstellung der Primärscheiben 18 und Sekundärscheiben 19 die Drehzahl des Zuförderers 6 und die Fördergeschwindigkeit der Preßeinrichtung 7 auf einen
maximalen Wert einregelt. Dabei ermittelt der Meßwertaufnehmer 26 ständig die Länge des den Förderschacht
8 des Aufbereiters 9 verlassenden Mattenstrangs. Verringert sich nun aufgrund eines geringen Halmgutbestands die Menge in der Vorkammer 5, so gelangt die Meßklappe 21 in den Bereich des Sensors 22, woraufhin die Regeleinrichtung 20 ebenfalls die Drehzahl des Zuförderers 6 und die Fördergeschwindigkeit der Preßeinrichtung 7 aufgrund einer Verstellung der Primärscheiben und Sekundärscheiben verringert. In entsprechender Weise wird über das Umschlingungsgetriebe 16 auch die Drehzahl am Aufbereiter 9 verringert. Ein sich ständig auf der Rutsche 15 befindender Mattenstrang könnte aufgrund dieses geringen Halmgutvolumens lange auf der Rutsche 15 bleiben und dort, sofern er über die Halmgutstoppeln streicht oder in starke Schwingungen versetzt wird, zerbröckeln. Es wird daher bei einer geringen Halmgutmenge in der Vorkammer 5, die, wie bereits dargelegt wurde, zu einer Verstellung des Umschlingungsgetriebes 16 führt, mit einer Zeitverzögerung die Schneideinrichtung 13 aktiviert.

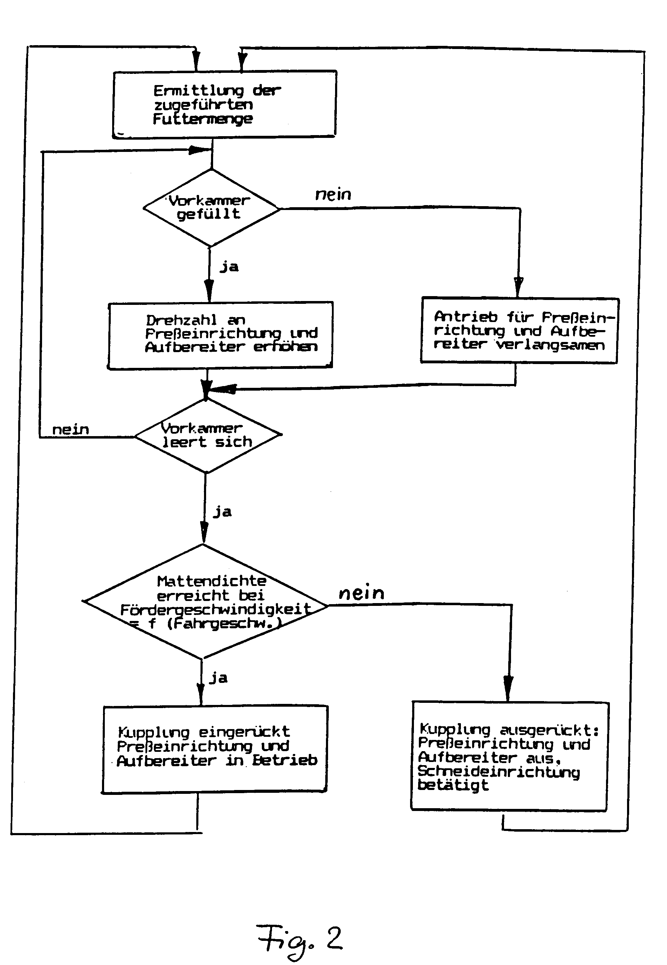

Anhand der Fig. 2 wird mittels eines Flußdiagramms nochmals die Funktion der Einrichtung beschrieben. Danach erfolgt eine Ermittlung des Futterzuflusses über eine Bestimmung der Menge in der Vorkammer 5. Ist die Vorkammer 5 gefüllt, so werden die Antriebe 16, 18, 19 der Preßeinrichtung 7 und des Aufbereiters 9 beschleunigt. Ist die Vorkammer 5 leer und eine bestimmte Mattendicke wird bei der momentanen Fahrgeschwindigkeit nicht erreicht, so wird eine im Umschlingungsgetriebe 16 (vorzugsweise in der Primärscheibe 16) vorgesehene Kupplung getrennt und die Schneideinrichtung 13 trennt die Halmgutmatte vom Mattenstrang ab. In den vorhergehenden überwachungsschritten sind Flußpfade vorgesehen, wobei bei nichtgefüllter Vorkammer 5 sich der Antrieb für die Preßeinrichtung 7 und den Aufbereiter 9 verlangsamt. Ist die Befüllung der Vorkammer 5 in einem normalen Zustand, das heißt, daß die Sensoren 22 und 23 kein eine Entleerung der Vorkammer kennzeichnendes Signal abgeben, so beginnt der überwachungsvorgang erneut.

Nachfolgend werden weitere Einzelheiten und Ausführungsformen des Aufbereiters 9 beschrieben: Der von den Preßändern 7a und 7b aus dem Halmgut herausgepreßte Grünfuttersaft gelangt in eine Sammeleinrichtung 27, von welcher mittels einer Förderpumpe 28 über ein Düsensystem 29 der auf der Rutsche 15 befindliche Halmgutstrang mit Grünfuttersaft besprüht wird. Am Ende der Rutsche ist eine Knickeinrichtung 30 in Form eines rotierenden Schlegels angeordnet, die im Anschluß an den Schneidvorgang für eine dachförmige Ausbildung der einzelne Halmgutmatten sorgt.

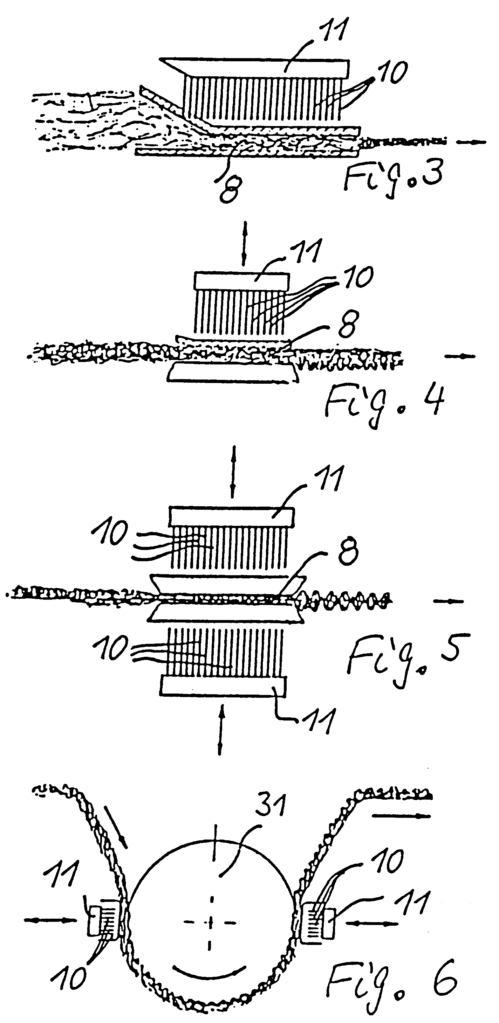

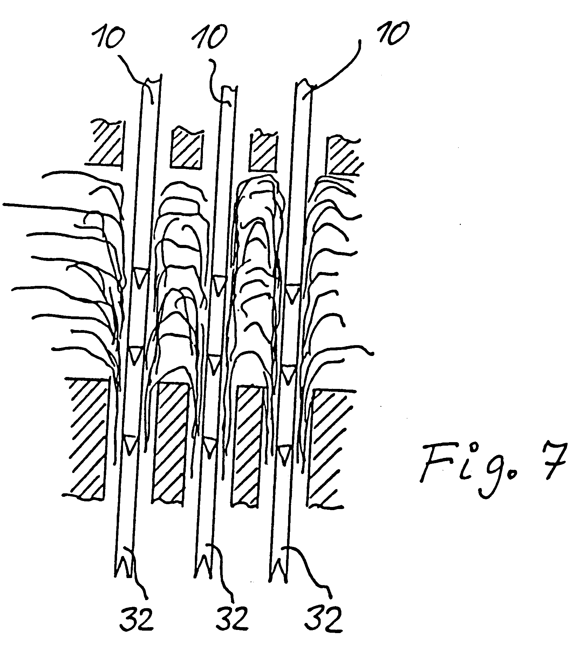

Bei der Ausgestaltung nach Fig. 3 ist der Förderschacht 8 sich in Strömungsrichtung des Halmgutes verengend ausgebildet, wobei Nadeln 10 einer Platte 11 diesen Förderschacht 8 intermittierend durchsetzen. Nach Fig. 4 ist ebenfalls einseitig des Förderschachts 8 eine Platte 11 mit Nadeln 10 angeordnet, wobei der Förderschacht 8 aber einen gleichmäßigen Querschnitt aufweist.

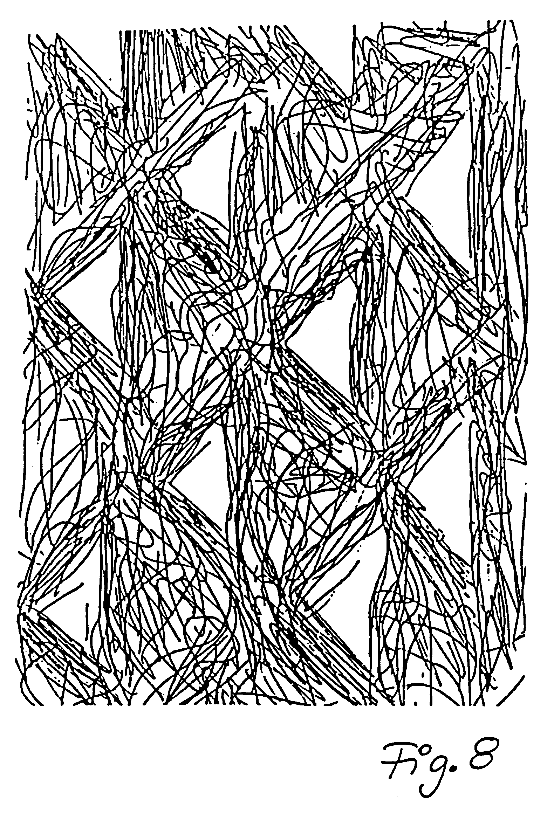

Nach Fig. 5 sind im Aufbereiter 9 gegenläufig bewegte Platten 11 mit Nadeln 10 vorgesehen, die den Förderschacht 8 jeweils von oben und unten her durchgreifen.

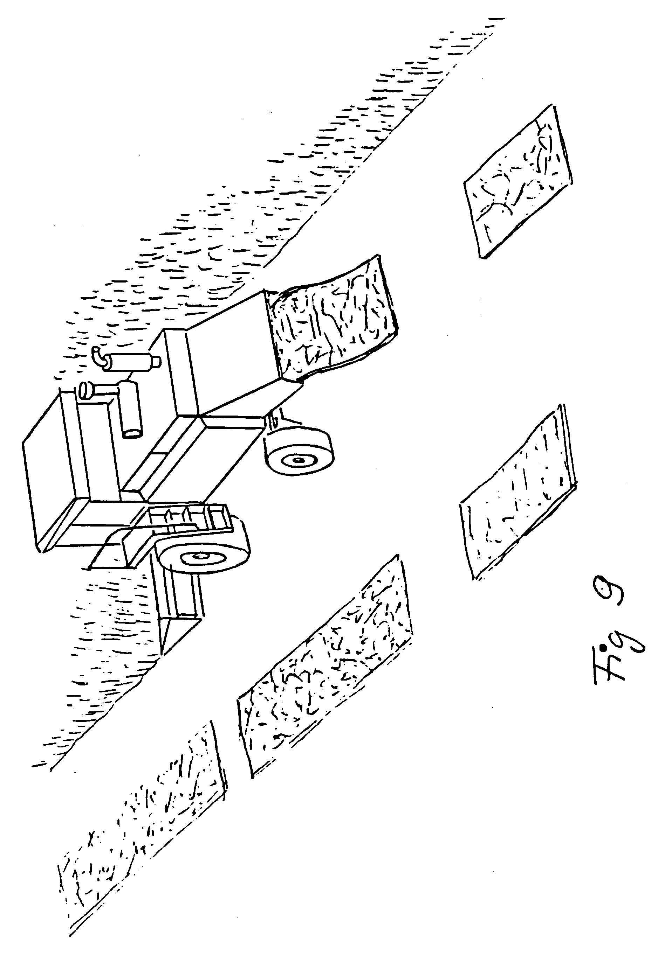

Schließlich ist bei der Ausführung nach Fig. 6 eine vorzugsweise profilierte Halmgutfördertrommel 31 vorgesehen, die in Umfangsrichtung die Halmgutmatte fördert, wobei in zwei Abschnittem radial zur Halmgutfördertrommel 31 bewegte Platten 11 angeordnet sind.

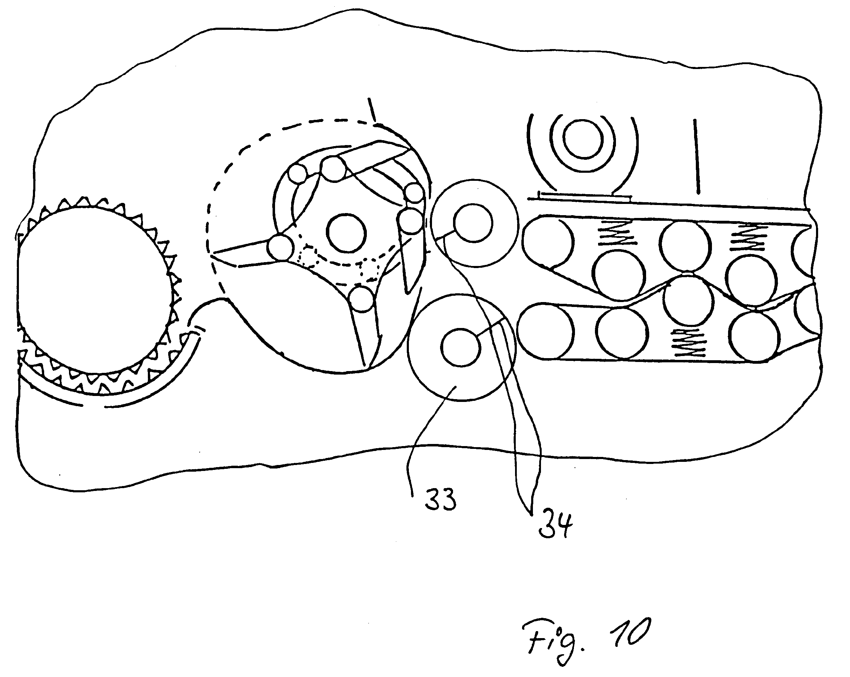

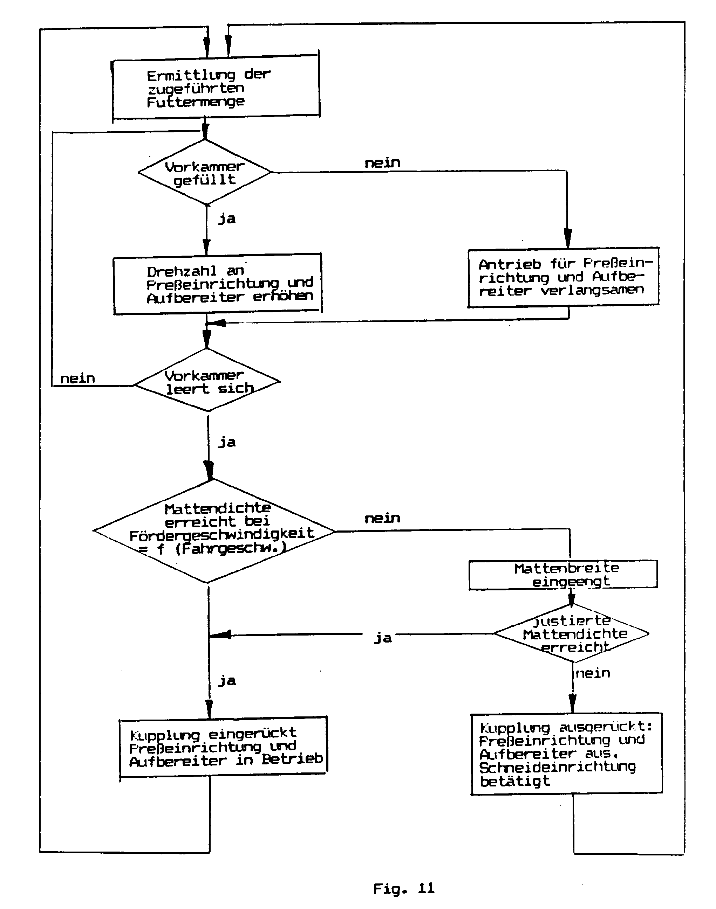

Die Figur 7 zeigt im einzelnen in eine Halmgutmatte eingreifende Nadeln 10 bei einer Ausbildung des Aufbereiters 9 gemäß Fig. 4. Die Nadeln 10 durchstechen die Halmgutmatte und ergreifen dabei mittels ihrer Mitnahmehaken 32 einzelne Halme und richten deren Enden quer zur Matte aus. Dabei hinterlassen die Nadeln 10 Einstichöffnungen, die in der Fig. 8 erkennbar sind, und an deren Rändern das Halmgut verfestigt wird. Insgesamt ergibt sich dadurch eine in sich verwirkte Halmgutmatte, die eine hohe Stabilität aufweist. Erfindungsgemäß kann eine entsprechende Ausrichtung der Halmgutenden auch über eine Druckflüssigkeit erfolgen, wobei gemäß Fig. 1 der in der Sammeleinrichtung 27 aufgefangene Saft des Grünfutters mit Wasser und gegebenenfalls einem Bindemittel vermischt wird und sodann über konzentrierte pulsierende Düsenstrahlen gegen die Halmgutmatte gespritzt wird. Dabei ist der günstige Nebeneffekt erzielbar, daß der einen hohen Nährstoffgehalt aufweisende Saft in die Halmgutmatte gelangt, in der sein Wasseranteil verdunsten kann. Insgesamt ergibt sich durch die Herstellung einer einen konstanten Querschnitt und eine konstante Dichte aufweisenden Matte, die weiterhin in sich verwirkt ist, eine sehr stabile Halmgutmatte, die während ihrer Bearbeitung und des nachfolgenden Trocknungsprozesses nicht zerfällt.

In der Fig. 10 ist ausgangsseitig der Vorkammer ein Querförderer 33 angeordnet, dessen Drehzahl ebenfalls über die Regeleinrichtung 20 in Abhängigkeit von der anfallenden Halmgutmenge geregelt wird. Der Querförderer 33 weist gegenläufig gewundene Schneckengänge 34 auf, die bei geringer Halmgutmenge für eine konzentrierte Zusammenführung des Halmguts und somit einer geringeren Mattenbreite sorgen.

Zwischen dem Zuförderer 6 und der Preßeinrichtung 7 können aber auch jeweils beidseitig dieses Zuführbereichs angeordnet sein, die in Abhängigkeit von dem Halmgutvolumen in der Vorkammer 5 die Zuführbreite verändern. Fig. 11 stellt anhand eines Flußdiagramms dar, daß anstelle der Fördergeschwindigkeit der Preßbänder 7a und 7b in Abhängigkeit von der in der Halmgutmenge die Zuführbreite in der Vorkammer 5 eingestellt wird.

Bezugszeichen

| | | |
|---|---|---|
| 1 | Mäheinrichtung | 30 Knickeinrichtung |
| 2 | Querförderer | 31 Halmgutfördertrommel |
| 3 | Elevator | 32 Mitnahmehaken |
| 4 | Konditionierer | 33 Querförderer |
| 5 | Vorkammer | 34 Schneckengänge von 33 |
| 6 | Zuförderer | |
| 6a | Förderzinken von 6 | |
| 6b | Exzenterantrieb von 6 | |
| 7 | Preßeinrichtung | |
| 7a | Preßband | |
| 7b | Preßband | |
| 7c | Preßspalt | |
| 8 | Förderschacht | |
| 9 | Aufbereiter | |
| 10 | Nadeln von 9 | |
| 11 | Platten von 9 | |
| 12 | Exzenterantrieb von 9 | |
| 13 | Schneideinrichtung | |
| 14 | Messer von 13 | |
| 15 | Rutsche | |
| 16 | Umschlingungsgetriebe | |
| 17 | Brennkraftmaschine | |
| 18 | Primärscheiben | |
| 19 | Sekundärscheiben | |
| 20 | Regeleinrichtungen | |
| 21 | Meßklappe | |
| 22 | Sensor für 21 | |
| 23 | Sensor für 21 | |
| 24 | Sensor für 7a bzw. 7b | |
| 25 | Sensor für Fahrgeschwindigkeit | |
| 26 | Meßwertaufnehmer | |
| 27 | Sammeleinrichtung | |
| 28 | Förderpumpe | |
| 29 | Düsensystem | |

**Patentansprüche**

1. Verfahren zur Grünfutteraufbereitung, bei welchem abgemähtes Halmgut zur Beschleunigung seines Trocknungsprozesses von gegenläufig rotierenden Preßelementen (7a, 7b), die die Halme aufspleißen, durch einen Preßspalt gefördert wird, dadurch gekennzeichnet, daß zur Herstellung einer eine im wesentlichen gleichmäßige Dichte und Querschnitt aufweisenden Halmgutmatte die dem Preßspalt (7c) zugeführte Halmgutmenge gemessen und in Abhängigkeit davon die Fördergeschwindigkeit der Preßelemente (7a, 7b) geregelt wird.

2. Verfahren zur Grünfutteraufbereitung, bei welchem abgemähtes Halmgut zur Beschleunigung seines Trocknungsprozesses von gegenläufig rotierenden Preßelementen (7a, 7b), die die Halme aufspleißen, durch einen Preßspalt gefördert wird, dadurch gekennzeichnet, daß zur Herstellung einer eine im wesentlichen gleichmäßige Dicke und Dichte aufweisenden Halmgutmatte die dem Preßspalt (7c) zugeführte Halmgutmenge gemessen und in Abhängigkeit davon die Breite des Halmgutstrangs im Zuführbereich zu den Preßelementen (7a, 7b) stufenlos verändert wird.

3. Verfahren zur Grünfutteraufbereitung nach Anspruch 1 oder 2, dadurch gekennzeichnet, daß ein den Preßelementen (7a und 7b) vorgeschalteter Raum vorgesehen ist, in dem eine sich dort ansammelnde Halmgutmenge gemessen wird.

4. Verfahren zur Grünfutteraufbereitung nach einem der Ansprüche 1 bis 3, dadurch gekennzeichnet, daß die Länge der den Preßspalt (7c) verlassenden Halmgutmatte ermittelt und in Abhängigkeit davon die Halmgutmatte durchtrennt wird.

5. Verfahren zur Grünfutteraufbereitung nach einem der Ansprüche 1 bis 4, dadurch gekennzeichnet, daß die Halmgutmatte durchtrennt wird.bei Erreichen einer Mindestlänge der Halmgutmatte und einer Verzögerung der Fördergeschwindigkeit der Preßelemente (7).

6. Verfahren zur Grünaufbereitung nach einem der Ansprüche 1 bis 5, dadurch gekennzeichnet, daß den Preßelementen (7) ein Aufbereiter (9) nachgeschaltet ist, der die Halme und sonstigen Grünfutter-Bestandteile vermischt und einzelne Halme ausrichtet und miteinander zu einer Halmgutmatte verwirkt.

7. Verfahren nach Anspruch 6, dadurch gekennzeichnet, daß der Aufbereiter (9) intermittierend in die Halmgutmatte eingreifende Mittel (10) aufweist.

8. Verfahren nach Anspruch 6, dadurch gekennzeichnet, daß die Halmgutmatte durch pulsierende Strahlen einer Druckflüssigkeit beaufschlagt wird.

9. Verfahren nach Ansprch 8, dadurch gekennzeichnet, daß dem flüssigen Druckmittel eine Bindemittel zugesetzt wird.

10. Verfahren nach Anspruch 8, dadurch gekennzeichnet, daß dem flüssigen Druckmittel in der Preßeinrichtung (7) aus dem Halmgut entweichender Saft zugesetzt wird.

11. Verfahren nach Anspruch 6, dadurch gekennzeichnet, daß die Halmgutmatte vor ihrer Ablage derart geknickt wird, daß diese dachförmig auf dem Halmgutstoppeln abgelegt wird.

12. Vorrichtung zur Durchführung des Verfahrens nach Anspruch 1 mit einer Mäh- oder Aufsammeleinrichtung (1) für das Halmgut und einer dieser nachgeschalteten Preßbänder (7a, 7b) oder Preßwalzen aufweisenden Preßeinrichtung (7), dadurch gekennzeichnet, daß in einer der Preßeinrichtung (7) vorgeschalteten Vorkammer (5) Sensoren (22 und 23) zur Ermittlung der momentan anfallenden Halmgutmenge angeordnet sind, daß die Preßeinrichtung (7) eine stufenlos einstellbare Antriebseinrichtung (Umschlingungsgetriebe 16) aufweist, und daß eine die Antriebseinrichtung (Umschlingungsgetriebe 16) in Abhängigkeit von dem über die Sensoren (22, 23) ermittelten Istwert der Halmgutmenge verstellende Regeleinrichtung (20) vorgesehen sit.

13. Vorrichtung zur Durchführung des Verfahrens nach Anspruch 2 mit einer Mäh- oder Aufsammeleinrichtung (1) für das Halmgut und einer dieser nachgeschalteten Preßbänder (7a, 7b) oder Preßwalzen aufweisenden Preßeinrichtung (7),
dadurch gekennzeichnet, daß in einer der Preßeinrichtung (7) vorgeschalteten Vorkammer (5) Sensoren (22,23) zur Ermittlung des Istwertes der momentan anfallenden Halmgutmenge angeordnet sind, daß in Abhängigkeit von dem über die Sensoren (22,23) ermittelten Istwert der Halmgut menge zur Einstellung der Zuführbreite zu den Preßelementen (7a, 7b) vertikal verlaufende Stellklappen oder Stellrollen in deren Zuführbereich, vorzugsweise der Vorkammer (5) nachgeschaltet, vorgesehen sind.

14. Vorrichtung zur Durchführung des Verfahrens nach Anspruch 2 mit einer Mäh- oder Aufsammelvorrichtung (1) für das Halmgut und einer dieser nachgeschalteten Preßbänder (7a, 7b) aufweisenden Preßeinrichtung (7),
dadurch gekennzeichnet, daß in einer der Preßeinrichtung (7) vorgeschalteten Vorkammer (5) Sensoren (22, 23) zur Ermittlung des Istwertes der momentan anfallenden Halmgutmenge angeordnet sind und daß in Abhängigkeit von dem über die Sensoren (22,23) ermittelten Istwert der Halmgut menge zur Einstellung der Zuführbreite zu den Preßelementen (7a, 7b) einer in seiner Drehzahl regelbarer Querförderer (33) vorgesehen ist, welcher im Zuführbereich, vorzugsweise der Vorkammer (5) nachgeschaltet, angeordnet ist.

15. Vorrichtung nach Anspruch 14,
dadurch gekennzeichnet, daß der Querförderer (33) als Förderschnecke ausgebildet ist.

16. Vorrichtung nach Anspruch 15,
dadurch gekennzeichnet, daß der Querförderer (33) zwei gegenläufig gewundene Schneckengänge (34) aufweist.

17. Vorrichtung nach Anspruch 12,
dadurch gekennzeichnet, daß die Antriebseinrichtung als stufenlos verstellbares Umschlingungsgetriebe (16) ausgebildet ist, dessen Primärscheibe (18) und Sekundärscheibe (19) in ihrem einem Antriebsriemen tragenden Durchmesser veränderbar sind.

18. Vorrichtung nach Anspruch 12,
dadurch gekennzeichnet, daß die Antriebseinrichtung eine durch die Regeleinrichtung betätigbare Kupplung aufweist.

19. Vorrichtung nach einem der Ansprüche 12 bis 14,
dadurch gekennzeichnet, daß der Preßeinrichtung (7) eine in vertikaler Richtung quer zur Bewegungsrichtung der Halmgutmatte wirkende Schneideinrichtung (13) nachgeschaltet ist, die durch die Regeleinrichtung (20) betätigbar ist in Abhängigkeit von dem über den Sensor (22) an die Regeleinrichtung (20) abgegebenen Signal "Vorkammer leer" und/oder einem die Mattenlänge bestimmenden Signal eines Meßwertaufnehmers (26).

20. Vorrichtung nach einem der Ansprüche 12 bis 14,
dadurch gekennzeichnet, daß ein die Halme ausrichtender Aufbereiter (9) als intermittierend quer zur Förderrichtung der Halmgutmatte bewegte Platte (11) mit daran befestigten Nadeln (10) ausgebildet ist, wobei die Nadeln (10) jeweils zumindest einen Mitnahmehaken (32) aufweisen.

21. Vorrichtung nach Anspruch 20,
dadurch gekennzeichnet, daß zumindest eine an ihrem Umfang mit Rillen versehene Halmgutfördertrommel (31) vorgesehen ist, zu der mit Nadeln (10) versehene Platte (11) radial intermittierend beweglich ist.

22. Vorrichtung nach Anspruch 20,
dadurch gekennzeichnet, daß die Nadeln (10) mit pilzförmigen Mitnahmehaken (32) versehen sind.

23. Vorrichtung nach Anspruch 20,
dadurch gekennzeichnet, daß die Nadeln (10) Begrenzungen eines Förderschachts (8) durchgreifen.

**24.** Vorrichtung nach Anspruch 20,
dadurch gekennzeichnet, daß paarweise zueinander bewegte Platten (11) an ihren einander zugewandten Flächen Ausnehmungen aufweisen, in die die Nadeln (10) der jeweils anderen Platte (11) hineinbewegbar sind.

**25.** Vorrichtung nach Anspruch 20,
dadurch gekennzeichnet, daß die Platten (11) über einen Exzenterantrieb (12) antreibbar sind.

**26.** Vorrichtung nach Anspruch 20,
dadurch gekennzeichnet, daß die Platten (11) und/oder Nadeln (10) mit einer Antihaft-Beschichtung versehen sind.

**27.** Vorrichtung nach Anspruch 20,
dadurch gekennzeichnet, daß dem Aufbereiter (9) ein Stein- und/oder Metallabscheider vorgeschaltet ist.

## Claims

**1.** A method of processing green feedstuff, in which pressure elements (7a, 7b) rotating in opposite directions accelerate the process of drying mown stalk material by splitting the stalks and conveying them through a nip, characterised in that in order to convert the stalks into a mat having a substantially uniform density and cross-section, the quantity of stalks supplied to the nip (7c) is measured and the conveying speed of the pressure elements (7a, 7b) is adjusted accordingly.

**2.** A method of processing green feedstuff, in which pressure elements (7a, 7b) rotating in opposite directions accelerate the process of drying mown stalk material by splitting the stalks and conveying them through a nip, characterised in that in order to convert the stalks into a mat having a substantially uniform thickness and density, the amount of stalk material supplied to the nip (7c) is measured and the width of the web of stalks in the inlet region of the pressure elements (7a, 7b) is steplessly adjusted accordingly.

**3.** A method of processing green feedstuff according to claim 1 or 2, characterised in that a chamber is provided in front of the pressure elements (7a and 7b), and the amount of stalk arterial accumulating in the chamber is measured.

**4.** A method of processing green feedstuff according to any of claims 1 to 3, characterised in that the length of the mat of stalks leaving the nip (7c) is measured and the mat is cut in dependence thereon.

**5.** A method of processing green feedstuff according to any of claims 1 to 4, characterised in that the mat is cut when it reaches a minimum length and the conveying speed of the pressure elements (7) is reduced.

**6.** A method of processing green feedstuff according to any of claims 1 to 5, characterised in that the pressure elements (7) are followed by a processor (9) which mixes the stalks with other constituents of the green feedstuff and aligns individual stalks and knits them into a mat.

**7.** A method according to claim 6, characterised in that the processor (9) comprises means (10) which intermittently engage in the mat of stalks.

**8.** A method according to claim 6, characterised in that the mat is acted upon by pulsating jets of a compressed fluid.

**9.** A method according to claim 8, characterised in that a binder is added to the fluid pressure medium.

**10.** A method according to claim 8, characterised in that the juice escaping from the stalks is added to the liquid pressure medium in the press (7).

**11.** A method according to claim 6, characterised in that the mat of stalks is bent into an inverted V before being deposited on to the stubble.

**12.** A device for working the method according to claim 1 and comprising a mowing or collecting device (1) for the stalk material, followed by a press (7) comprising belts (7a, 7b) or rollers, characterised in that sensors (22, 23) for detecting the amount of stalks arriving at the moment are disposed in a pre-chamber (5) in front of the press (7), the press (7) comprises a steplessly adjustable drive means (a belt drive 16), and a regulating device (20) is provided and adjusts the drive means (the belt drive 16) in dependence on the actual quantity of stalk material as measured by the sensors (22, 23).

13. A device for working the method according to claim 2 and comprising a mowing or collecting device (1) for the stalk material, followed by a press (7) comprising belts (7a, 7b) or rollers, characterised in that sensors (22, 23) for determining the amount of stalk material arriving at the moment are disposed in a pre-chamber (5) in front of the press (7), and vertically movable flaps or rollers for adjusting the width of the inlet to the pressure elements (7a, 7b) in dependence on the actual amount of stalks measured by the sensors (22, 23) are disposed in the inlet region, preferably behind the pre-chamber (7).

14. A device for working the method according to claim 2 and comprising a mowing or collecting device (1) for the stalk material, followed by a press (7) comprising belts (7a, 7b) or rollers, characterised in that sensors (22, 23) for determining the actual amount of stalk material arriving at the moment are disposed in a pre-chamber (5) in front of the press (7) and an adjustable-speed transverse conveyor (33) is provided for adjusting the width of the inlet to the press elements (7a, 7b) in dependence on the actual quantity of stalks as measured by the sensors (22, 23), the transverse conveyor being disposed in the inlet region, preferably behind the pre-chamber (5).

15. A device according to claim 14, characterised in that the transverse conveyor (33) is a screw conveyor.

16. A device according to claim 15, characterised in that the transverse conveyor (33) has two spirals (34) winding in opposite directions.

17. A device according to claim 12, characterised in that the drive means is a steplessly adjustable belt drive (16) comprising a primary pulley (18) and a secondary pulley (19) having adjustable diameters for bearing the drive belt.

18. A device according to claim 12, characterised in that the drive means has a clutch actuated by the regulating device.

19. A device according to any of claims 12 to 14, characterised in that the press (7) is followed by a cutter (13) which operates in the vertical direction transversely to the direction of motion of the mat of stalks, the cutter being actuated by the regulating device (20) in dependence on a "pre-chamber empty" signal delivered by the sensor (22) to the regulating device (20) and/or a signal from a transducer (26) for determining the length of the mat.

20. A device according to any of claims 12 to 14, characterised in that a processor (9) for aligning the stalks is in the form of needles (10) secured to a plate (11) intermittently movable transversely to the direction of conveyance of the mat of stalks, each needle (10) having at least one entraining hook (32).

21. A device according to claim 20, characterised in that at least one drum (31) for conveying the stalk material is provided and has peripheral grooves, and the plate (11) bearing the needles (10) is intermittently movable radially towards the drum.

22. A device according to claim 20, characterised in that the needles (10) have mushroom-shaped entraining hooks (32).

23. A device according to claim 20, characterised in that the needles (10) extend through boundaries of a conveying shaft (8).

24. A device according to claim 20, characterised in that paired moving plates (11) have facing surfaces formed with recesses into which the needles (10) on the respective other plate (11) can be moved.

25. A device according to claim 20, characterised in that the plates (11) are drivable by an eccentric drive (12).

26. A device according to claim 20, characterised in that the plates (11) and/or needles (10) are given an anti-stick coating.

**27.** A device according to claim 20, characterised in that the processor (9) is preceded by a stone and/or metal remover.

## Revendications

**1.** Procédé pour la préparation du fourrage vert, dans lequel l'herbe fauchée, pour accélérer son processus de séchage, est transportée à travers une fente de pressage par des éléments de pressage (7a, 7b) tournant en sens inverse, qui étalent l'herbe, procédé caractérisé en ce que pour réaliser une natte d'herbe ayant essentiellement une densité et une section transversale uniformes, la quantité d'herbe amenée à la fente de pressage (7c) est mesurée et la vitesse de transport des éléments de pressage (7a, 7b) est réglée en fonction de cette mesure.

**2.** Procédé pour la préparation du fourrage vert, dans lequel l'herbe fauchée, pour accélérer son processus de séchage, est transportée à travers une fente de pressage par des éléments de pressage (7a, 7b) tournant en sens inverse, qui étalent l'herbe, procédé caractérisé en ce que pour réaliser une natte d'herbe ayant essentiellement une épaisseur et une densité uniformes, la quantité d'herbe amenée à la fente de pressage (7c) est mesurée et la largeur du cordon d'herbe dans la zone d'alimentation des éléments de pressage (7a, 7b) est modifiée en continu.

**3.** Procédé pour la préparation du fourrage vert selon la revendication 1 ou la revendication 2, caractérisé en ce qu'il est prévu en amont des éléments de pressage (7a et 7b), une chambre dans laquelle est mesurée la quantité d'herbe qui s'y rassemble.

**4.** Procédé pour la préparation du fourrage vert selon une des revendications 1 à 3, caractérisé en ce que la longueur de la natte d'herbe quittant la fente de pressage (7c) est déterminée et en fonction de cette longueur, la natte d'herbe est tronçonnée.

**5.** Procédé pour la préparation du fourrage vert selon une des revendications 1 à 4, caractérisé en ce que la natte d'herbe est tronçonnée lorsque est atteinte une longueur minimale de cette natte d'herbe et un ralentissement de la vitesse de transport des éléments de pressage (7).

**6.** Procédé pour la préparation du fourrage vert selon une des revendications 1 à 5, caractérisé en ce qu'il est prévu en aval des éléments de pressage (7) un préparateur (9) qui mélange les tiges et les autres parties constitutives du fourrage vert et qui redresse différentes tiges et les entremêle pour constituer une natte d'herbe.

**7.** Procédé selon la revendication 6, caractérisé en ce que le préparateur (9) comporte des moyens (10) venant en prise par intermittence dans la natte d'herbe.

**8.** Procédé selon la revendication 6, caractérisé en ce que la natte d'herbe est exposée à des jets pulsants d'un liquide sous pression.

**9.** Procédé selon la revendication 8, caractérisé en ce qu'un liant est ajouté au liquide sous pression.

**10.** Procédé selon la revendication 8, caractérisé en ce qu'au liquide sous pression est ajouté le jus s'écoulant de l'herbe dans le dispositif de pressage (7).

**11.** Procédé selon la revendication 6, caractérisé en ce que la natte d'herbe est coudée avant son dépôt de façon qu'elle se dépose en forme de toit sur les chaumes.

**12.** Dispositif pour la mise en oeuvre du procédé selon la revendication 1 avec un équipement de fauchage ou de ramassage (1) de l'herbe et en aval de celui-ci un équipement de pressage (7) comportant des bandes de pressage (7a, 7b) ou bien des cylindres de pressage, dispositif caractérisé en ce que dans une préchambre (5) prévue en amont de l'équipement de pressage (7) sont disposés des détecteurs (22 et 23) pour la détermination de la quantité d'herbe présente à un moment donné, en ce que l'équipement de pressage (7) comporte un dispositif d'entraînement réglable en continu (transmission par enroulement 16), et en ce qu'il est prévu un dispositif de réglage (20) réglant le dispositif d'entraînement (transmission par enroulement 16) en fonction de la valeur réelle de la quantité d'herbe, déterminée par l'intermédiaire

EP 0 467 897 B1

des détecteurs (22, 23).

13. Dispositif pour la mise en oeuvre du procédé selon la revendication 2, avec un équipement de fauchage ou de ramassage (1) de l'herbe et en aval de cet équipement, un équipement de pressage (7) comportant des bandes de pressage (7a, 7b) ou bien des cylindres de pressage, dispositif caractérisé en ce que, dans une préchambre (5) prévue en amont de l'équipement de pressage (7), sont disposés des détecteurs (22, 23) pour permettre de déterminer la valeur réelle de la quantité d'herbe présente à un moment donné, et en ce que pour le réglage en fonction de cette valeur réelle de la quantité d'herbe, déterminée par l'intermédiaire des détecteurs (22, 23), de la largeur d'alimentation vers les éléments de pressage (7a, 7b), il est prévu dans cette zone d'alimentation, de préférence en aval de la préchambre (5), des clapets de réglage s'étendant verticalement ou bien des rouleaux de réglage.

14. Dispositif pour la mise en oeuvre du procédé selon la revendication 2, avec un équipement de fauchage ou de ramassage (1) de l'herbe et avec, en aval de cet équipement, un équipement de pressage (7) comportant des bandes de pressage (7a, 7b), dispositif caractérisé en ce que dans une préchambre (5) prévue en amont de l'équipement de pressage (7), sont disposés des détecteurs (22, 23) pour déterminer la valeur réelle de la quantité d'herbe présente à un moment donné et en ce que pour régler en fonction de la valeur réelle de la quantité d'herbe déterminée par l'intermédiaire des détecteurs (22, 23), la largeur d'alimentation vers les éléments de pressage (7a, 7b), il est prévu un transporteur transversal (33) dont la vitesse de rotation est susceptible d'être réglée, ce transporteur étant disposé dans la zone d'alimentation, de préférence en aval de la préchambre (5).

15. Dispositif selon la revendication 14, caractérisé en ce que le transporteur transversal (33) revêt la forme de vis transporteuses.

16. Dispositif selon la revendication 15, caractérisé en ce que le transporteur transversal (33) comporte deux pas de vis (34) filetées en sens inverse.

17. Dispositif selon la revendication 12, caractérisé en ce que le dispositif d'entraînement est réalisé sous la forme d'une transmission par enroulement (16) susceptible d'être réglée en continu, et dont les disques primaires (18) et les disques secondaires (19) sont susceptibles d'être modifiés en ce qui concerne leur diamètre portant une courroie d'entraînement.

18. Dispositif selon la revendication 12, caractérisé en ce que le dispositif d'entraînement comporte un coupleur susceptible d'être actionné par le dispositif de réglage.

19. Dispositif selon une des revendications 12 à 14, caractérisé en ce qu'en aval de l'équipement de pressage (7) est prévu un dispositif de coupe (13) agissant en direction verticale, transversalement par rapport à la direction de déplacement de la natte d'herbe, et qui est susceptible d'être actionné par l'intermédiaire du dispositif de réglage (20) en fonction du signal "préchambre vide" délivré par l'intermédiaire du détecteur (22) au dispositif de réglage (20) et/ou en fonction d'un signal d'un capteur de valeur de mesure (26) déterminant la longueur de la natte.

20. Dispositif selon une des revendications 12 à 14, caractérisé en ce qu'un préparateur (9) redressant les tiges est réalisé sous la forme d'une plaque (11) avec des aiguilles (10) fixées sur elle et qui se déplace par intermittence transversalement par rapport à la direction de transport de la natte d'herbe, tandis que les aiguilles (10) comportent respectivement au moins, un crochet d'entraînement (32).

21. Dispositif selon la revendication 20, caractérisé en ce qu'il est prévu au moins un tambour transporteur d'herbe (31) muni de nervures sur sa périphérie et par rapport auquel la plaque (11) munie d'aiguilles (10) se déplace radialement par intermittence.

22. Dispositif selon la revendication 20, caractérisé en ce que les aiguilles (10) sont munies de crochets d'entraînement (32) en forme de champignons.

23. Dispositif selon la revendication 20, caractérisé en ce que les aiguilles (10) traversent les délimitations d'une gaine de transport (8).

24. Dispositif selon la revendication 20, caractérisé en ce que des plaques (11) se déplaçant par paires l'une par rapport à l'autre, comportent sur leur surface tournée l'une vers l'autre, des évidements dans lesquels les aiguilles (10) de respectivement l'autre plaque (11) sont susceptibles de se déplacer.

25. Dispositif selon la revendication 20, caractérisé en ce que les plaques (11) sont susceptibles d'être entraînées par l'intermédiaire d'un entraînement à excentrique (12).

26. Dispositif selon la revendication 20, caractérisé en ce que les plaques (11) et/ou les aiguilles (10) sont munies d'un revêtement anti-adhérence.

27. Dispositif selon la revendication 20, caractérisé en ce qu'il est prévu en amont du préparateur (9), un séparateur pour les pierres et/ou les parties métalliques.

Fig. 1

Fig. 2

11

10

8

Fig. 3

11

10

8

Fig. 4

11

10

8

10

11

Fig. 5

31

11

10

11

10

Fig. 6

17

Fig. 7

Fig. 8

Fig 9

Fig. 10

Fig. 11